# EUROPÄISCHE PATENTANMELDUNG

(11) **EP 3 659 955 A1**
(43) Veröffentlichungstag der Anmeldung: **03.06.2020**
(21) Anmeldenummer: 18209385.6
(22) Anmeldetag: 30.11.2018
(51) Int. Cl.: B66B 11/04, H02K 7/08, H02K 7/10, H02K 21/12

(54) **GETRIEBELOSE PERMANENTMAGNET-SYNCHRONMASCHINE FÜR EINEN AUFZUG**

(71) Anmelder: Inventio AG, 6052 Hergiswil (CH)
(72) Erfinder: AMMON, Urs, 6030 Ebikon (CH)

(57) **Zusammenfassung**

Es wird eine getriebelose Permanentmagnet-Synchronmaschine (1) für einen Aufzug beschrieben, die einen ersten und einen zweiten Lagerträger (3, 5), einen Schaft (7), eine Laufrolle (9), einen Rotor (11) mit daran angeordneten Rotormagneten (13) und einen Stator (15) mit daran angeordneten Statorwicklungen (17) aufweist. Ein erstes Lager (23), über welches der Schaft (7) an einem ersten Ende (21) gelagert gehalten ist, sowie die Rotormagnete (13) sind dabei innerhalb einer axialen Tiefe der Statorwicklungen (17) angeordnet. Dadurch wird eine in Axialrichtung (19) besonders kurze Bauform erreicht.

## Beschreibung

Die vorliegende Erfindung betrifft eine Getriebelose Permanentmagnet-Synchronmaschine für einen Aufzug.

In Aufzügen werden Aufzugkabinen meist mithilfe von Antriebsmaschinen, die durch Elektromotoren angetrieben werden, innerhalb eines Aufzugschachts verlagert. Insbesondere bei einer Anwendung in Gebäuden, bei denen eine Aufzugkabine über mehrere Stockwerke verlagert werden soll, ist die Aufzugkabine dabei meist von Seil- oder Riemen-artigen Tragmitteln gehalten und kann durch Verlagern dieser Tragmittel nach oben gezogen oder nach unten abgelassen werden. Die Tragmittel verlaufen dabei typischerweise über eine Laufrolle der Antriebsmaschine, welche elektromotorisch rotiert werden kann.

Generell ist anzustreben, Antriebsmaschinen für Aufzüge klein, leicht und technisch einfach auszugestalten. Hierdurch können Sie platzsparend und einfach in einem Aufzugschacht montiert werden, einfach gewartet werden und/oder robust betrieben werden.

Es wurden Permanentmagnet-Synchronmaschinen entwickelt, welches sich besonders für einen Einsatz in Aufzügen eignen, da sie den zuvor genannten Anforderungen Rechnung tragen.

Beispielsweise wird in der CN 103342276 A ein Permanentmagnet-Elektromotor beschrieben, der sich gut für einen Einsatz als Minenaufzug eignet.

Es kann unter anderem ein Bedarf an einer Elektromaschine bestehen, der unter anderem den oben aufgeführten Anforderungen besonders gut entspricht und sich daher für einen Einsatz in einem Aufzug eignet. Insbesondere kann ein Bedarf an einer Elektromaschine bestehen, der einen kleinen Bauraum aufweist und/oder mit verhältnismässig wenigen, vorzugsweise einfach ausgestalteten Komponenten ausgebildet ist.

Einem solchen Bedarf kann durch den Gegenstand gemäss dem unabhängigen Anspruch entsprochen werden. Vorteilhafte Ausführungsformen sind in den abhängigen Ansprüchen sowie der nachfolgenden Beschreibung definiert.

Gemäss einem Aspekt der Erfindung wird eine getriebelose Permanentmagnet-Synchronmaschine für einen Aufzug vorgeschlagen, welche einen ersten und einen zweiten Lagerträger, einen Schaft, eine Laufrolle, einen Rotor mit daran angeordneten Rotormagneten und einen Stator mit daran angeordneten Statorwicklungen aufweist. Der Schaft erstreckt sich in Axialrichtung zwischen dem ersten und dem zweiten Lagerträger. Der Schaft ist nahe einem ersten Ende durch ein erstes Lager an dem ersten Lagerträger rotierfähig gelagert gehalten und nahe einem zweiten Ende durch ein zweites Lager an dem zweiten Lagerträger rotierfähig gelagert gehalten. Die Laufrolle ist drehfest an dem Schaft angeordnet. Der Rotor ist drehfest an der Laufrolle angeordnet und in einer zylindrisch um das erste Lager umlaufenden Ausnehmung in dem ersten Lagerträger aufgenommen. Der Stator ist drehfest an dem ersten Lagerträger angeordnet und in der zylindrisch um das erste Lager umlaufenden Ausnehmung aufgenommen. Die Statorwicklungen erstrecken sich innerhalb eines zylindrischen, um das erste Lager umlaufenden ersten Volumens, welches von einem axial vorderen ersten Rand bis zu einem axial hinteren ersten Rand reicht. Die Rotormagnete erstrecken sich innerhalb eines zylindrischen, um das erste Lager umlaufenden zweiten Volumens, welches von einem axial vorderen zweiten Rand bis zu einem axial hinteren zweiten Rand reicht. Das erste Lager erstreckt sich innerhalb eines zylindrischen, um den Schaft nahe seinem ersten Ende umlaufenden dritten Volumens, welches von einem axial vorderen dritten Rand bis zu einem axial hinteren dritten Rand reicht, erstreckt. Dabei verlaufen der vordere zweite Rand, der hintere zweite Rand, der vordere dritte Rand und der hintere dritte Rand innerhalb einer von dem vorderen ersten Rand und dem hinteren ersten Rand begrenzten axialen Längenbegrenzung.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Kurz zusammengefasst wird eine aus verhältnismässig wenigen Komponenten aufgebaute Permanentmagnet-Synchronmaschine vorgeschlagen, die angesichts ihrer Leistungsfähigkeit einen besonders kleinen Bauraum, insbesondere eine besonders kurze axialen Länge, aufweist. Dies kann durch eine vorteilhafte Positionierung des ersten Lagers und der Rotormagnete relativ zu den Statorwicklungen erreicht werden.

Die Permanentmagnet-Synchronmaschine weist zwei separate Lagerträger auf. Die Lagerträger werden teilweise auch als Maschinenständer bezeichnet. Die Lagerträger dienen insbesondere dazu, den Schaft rotierbar zu lagern und dabei die von dem Schaft ausgeübten Kräfte an tragende Strukturen innerhalb eines Gebäudes abzuleiten. Hierfür sind die Lagerträger ausreichend mechanisch stabil konzipiert. Meistens bestehen die Lagerträger aus Metall wie zum Beispiel Stahl.

Ein Maschinenrahmen ist bei dem hier vorgestellten Konzept nicht notwendig. Eine lasttragende Eigenschaft kann bei der vorgestellten Permanentmagnet-Synchronmaschine von den beiden Lagerträgern bereitgestellt werden. Hierdurch kann ein Aufbau der Permanentmagnet-Synchronmaschine einfach ausgestaltet sein und mit wenigen Bauteilen auskommen.

Die Laufrolle, welche beim Einsatz als Antrieb in einem Aufzug mit den die Aufzugkabine haltenden Tragmitteln zusammenwirkt, ist mit einem passiven Schaft verbunden. Die Laufrolle wie auch der Schaft sind mit Materialien gefertigt und geeignet dimensioniert, um den im Einsatz in einer Aufzugantriebsmaschine auftretenden Kräften standhalten zu können. Meist besteht sowohl die Laufrolle als auch der Schaft aus Metall, insbesondere Stahl.

Die mechanische Verbindung zwischen der Laufrolle und dem Schaft sollte zumindest drehfest ausgestaltet sein. Vorzugsweise ist die Laufrolle formschlüssig und/oder kraftschlüssig mit dem Schaft verbunden. Drehmomente können somit von der Laufrolle auf den Schaft übertragen werden, sodass sich der Schaft dreht, sobald die Laufrolle in Rotation versetzt wird.

Der passive Schaft erstreckt sich zwischen den beiden Lagerträgern und ist an diesen jeweils durch ein Lager rotierfähig gelagert gehalten. Anders ausgedrückt kann sich der Schaft relativ zu den beiden Lagerträgern um seine Längsachse drehen, wobei Reibungsverluste durch eine geeignete Ausgestaltung des ersten und des zweiten Lagers minimiert werden. Der Schaft ist dabei als passiver Schaft ausgebildet, d.h., es wird im Wesentlichen kein Drehmoment, sondern ausschliesslich radiale Kräfte über den Schaft übertragen.

Der Rotor der Permanentmagnet-Synchronmaschine ist drehfest an der Laufrolle angeordnet. Der Rotor umfasst dabei Rotormagnete sowie eine Haltestruktur, in bzw. an der diese Rotormagnete angeordnet sind. Die Rotormagnete können vorzugsweise starke Permanentmagnete sein. Die Haltestruktur kann ausreichend mechanisch stabil ausgebildet sein, um bei den im Betrieb der Synchronmaschine auftretenden hohen Kräften die Rotormagnete zuverlässig zu halten. Insbesondere kann die Haltestruktur aus Metall bestehen oder mit Metall ausgebildet sein. Zumindest Teile dieses Rotors, insbesondere die genannte Haltestruktur, können dabei integral mit der Laufrolle ausgebildet sein. Alternativ können Teile des Rotors als separate Bauteile an der Laufrolle befestigt sein.

Der Stator ist drehfest an dem ersten Lastenträger angeordnet. Der Stator umfasst dabei Statorwicklungen sowie eine Struktur, auf der diese Statorwicklungen aufgewickelt bzw. an der diese Statorwicklungen angeordnet sind. Die Statorwicklungen können aus einem elektrisch sehr gut leitfähigen Material wie zum Beispiel Kupfer bestehen oder mit einem solchen Material ausgebildet sein. Die Statorwicklungen können auf einen Kern, insbesondere einen ferromagnetischen Kern, aufgewickelt sein. Die Statorwicklungen können mit einer elektrischen Leistungsversorgung der Synchronmaschine verbunden sein.

In dem ersten Lastenträger ist in einem zentralen Bereich das erste Lager gehalten, welches den Schaft nahe dessen erstem Ende lagert. Zylindrisch um dieses erste Lager umlaufend ist in dem ersten Lagerträger eine Ausnehmung ausgebildet. Die zylindrisch umlaufende Ausnehmung kann auch als ringförmige Nut interpretiert werden. Sie ist zu einer zu der Laufrolle gerichteten Seite hin offen. In dieser umlaufenden Ausnehmung sind sowohl der Rotor als auch der Stator der Permanentmagnet-Synchronmaschine zumindest teilweise, vorzugsweise jedoch vollständig, aufgenommen.

Die Statorwicklungen des Stators erstrecken sich dabei innerhalb eines ringförmigen, zylindrisch um das erste Lager umlaufenden ersten Volumens. Dieses erste Volumen kann als dasjenige Volumen verstanden werden, das von den Statorwicklungen ausgefüllt wird. Dieses erste Volumen reicht in einer Axialrichtung gesehen von einem vorderen ersten Rand bis zu einem hinteren ersten Rand. Als "Rand" kann hierbei eine Ebene verstanden werden, die orthogonal zur Axialrichtung verläuft und die in Axialrichtung vorne bzw. hinten bis an das jeweilige von dem Rand begrenzte Bauteil, das heisst in diesem Fall bis an die Statorwicklungen, reicht. Der Bereich zwischen dem vorderen ersten Rand und dem hinteren ersten Rand wird hierin als axiale Längenbegrenzung bezeichnet.

Die Rotormagnete des Rotors erstrecken sich innerhalb eines ringförmigen, zylindrisch um das erste Lager umlaufenden zweiten Volumens. Das zweite Volumen kann als dasjenige Volumen verstanden werden, dass von den Rotormagneten ausgefüllt wird. Dieses zweite Volumen reicht in der Axialrichtung gesehen von einem vorderen zweiten Rand bis zu einem hinteren zweiten Rand. Die Rotormagnete sollen dabei derart angeordnet und dimensioniert sein, dass der vordere und der hintere zweite Rand innerhalb der von dem vorderen ersten Rand und dem hinteren ersten Rand definierten Längenbegrenzung verlaufen. Anders ausgedrückt soll das zweite Volumen, in dem sich die Rotormagnete erstrecken, auf die Axialrichtung projiziert gesehen innerhalb des ersten Volumens, in dem sich die Statorwicklungen erstrecken, angeordnet sein.

Das erste Lager erstreckt sich innerhalb eines ringförmigen, zylindrisch um den Schaft nahe seinem ersten Ende umlaufenden dritten Volumens. Das dritte Volumen kann als dasjenige Volumen verstanden werden, das von dem ersten ringartigen Lager ausgefüllt wird. Das dritte Volumen reicht in der Axialrichtung gesehen von einem vorderen dritten Rand bis zu einem hinteren dritten Rand. Das erste Lager soll dabei derart angeordnet und dimensioniert sein, dass der vordere und der hintere dritte Rand innerhalb der von dem vorderen ersten Rand und dem hinteren ersten Rand definierten Längenbegrenzung verlaufen. Anders ausgedrückt soll das dritte Volumen, in dem sich das erste Lager erstreckt, auf die Axialrichtung projiziert gesehen innerhalb des ersten Volumens, in dem sich die Statorwicklungen erstrecken, angeordnet sein.

Mit anderen Worten sollen sowohl die Rotormagnete als auch das erste Lager in dem ersten Lagerträger sich innerhalb einer axialen Tiefe befinden, die innerhalb der von den Statorwicklungen definierten axialen Längenbegrenzung verläuft.

Es ist insbesondere diese spezielle Ausgestaltung und Anordnung der Rotormagnete und des ersten Lagers, welche die hierin vorgestellte Permanentmagnet-Synchronmaschine von herkömmlichen elektrischen Maschinen für Aufzüge unterscheidet. Während bei herkömmlichen elektrischen Maschinen wie beispielsweise der in der CN 103342276 A beschriebenen Maschine die Rotormagnete und/oder das erste Lager zumindest teilweise in Axialrichtung ausserhalb der von den Statorwicklungen definierten axialen Längenbegrenzung liegen, wurde vorliegend erkannt, dass eine axiale Baulänge einer Permanentmagnet-Synchronmaschine signifikant reduziert werden kann, indem die Rotormagnete und das erste Lager wie hierin beschrieben positioniert werden und dabei innerhalb der von den Statorwicklungen definierten axialen Längenbegrenzung liegen.

Gemäss einer Ausführungsform ist der Schaft und die Laufrolle einteilig, insbesondre als einteiliges Gussteil ausgebildet.

Vorteilhaft erweist sich, dass so die Anzahl Bauteil der Maschine weitere reduziert wird und die Maschine so noch einfacher und kostengünstiger hergestellt werden kann.

Gemäss einer Ausführungsform kann ein Schwerpunkt des ersten Lagers sich in Axialrichtung näher bei der Laufrolle befinden als ein Schwerpunkt der Statorwicklungen.

Anders ausgedrückt kann das erste Lager bzw. dessen geometrischer Mittelpunkt in Axialrichtung näher bei der Laufrolle angeordnet sein als die Statorwicklungen bzw. ein geometrischer Mittelpunkt dieser Statorwicklungen. Zusammen mit der vorangehend beschriebenen Baulängenverkürzung kann hierdurch unter anderem eine vorteilhafte Kräfteverteilung innerhalb der Permanentmagnet-Synchronmaschine erreicht werden.

Gemäss einer Ausführungsform weist der erste Lagerträger in einem radial zentralen Bereich eine Durchgangsöffnung auf. Das erste Lager und ein an dem ersten Lager gelagerter Teil des Schafts erstrecken sich dabei in Axialrichtung lediglich durch einen ersten Teilbereich der Durchgangsöffnung, ragen jedoch nicht in einen zweiten Teilbereich der Durchgangsöffnung.

Mit anderen Worten kann der erste Lagerträger oder zumindest ein Teil des ersten Lagerträgers ringförmig, insbesondere kreisringförmig ausgebildet sein. Um den zentralen Bereich herum erstreckt sich dabei eine ringförmige Struktur, in der die um das erste Lager umlaufenden Ausnehmung, in der der Stator und der Rotor aufgenommen sind, ausgebildet ist. Der zentrale Bereich selbst bildet eine Durchgangsöffnung durch diese ringförmige Struktur. In dieser Durchgangsöffnung der ringförmigen Struktur des ersten Lagerträgers ist das erste Lager aufgenommen und drehfest mit dem Lagerträger verbunden. Das erste Ende des Schafts ist in dem ersten Lager gehalten und erstreckt sich somit ebenfalls innerhalb der Durchgangsöffnung.

Allerdings sollen sich sowohl das erste Lager als auch das erste Ende des Schafts lediglich bis in einen Teil dieser Durchgangsöffnung erstrecken, wohingegen ein verbleibender Teilbereich der Durchgangsöffnung nicht von dem ersten Lager und/oder dem Ende des Schafts eingenommen wird. Mit anderen Worten bleibt der zweite Teilbereich der Durchgangsöffnung in dem ersten Lagerträger frei von den bisher genannten Komponenten der Permanentmagnet-Synchronmaschine.

Gemäss einer Ausführungsform kann die Permanentmagnet-Synchronmaschine ferner wenigstens eine Zusatzkomponente aufweisen. Diese Zusatzkomponente kann zumindest teilweise in dem zweiten Teilbereich aufgenommen sein.

Anders ausgedrückt kann die Permanentmagnet-Synchronmaschine ergänzend zu den bereits zuvor genannten Komponenten zumindest eine Zusatzkomponente aufweisen, die für die Permanentmagnet-Synchronmaschine nützlich ist. Diese Zusatzkomponente kann in dem nicht von dem ersten Lager bzw. dem ersten Ende des Schafts blockierten Teil der Durchgangsöffnung in dem ersten Lagerträger aufgenommen sein. Dabei kann die Zusatzkomponente vollständig oder zumindest teilweise in dem ansonsten frei bleibenden zweiten Teilbereich aufgenommen sein. Somit wirkt die Zusatzkomponente nicht oder lediglich geringfügig baugrössenvergrössernd. D.h. die gesamte Permanentmagnet-Synchronmaschine einschliesslich der Zusatzkomponente benötigt nicht mehr oder nur unwesentlich mehr Bauraum als ohne die Zusatzkomponente.

Eine solche Ausgestaltung bietet sich gemäss einer Ausführungsform insbesondere für eine Zusatzkomponente an, die einen Betrieb der Permanentmagnet-Synchronmaschine steuert oder regelt.

Mit anderen Worten, kann die Zusatzkomponente eine Steuerung oder Regelung sein, die beispielsweise eine Leistungsversorgung der Permanentmagnet-Synchronmaschine steuert bzw. regelt. Eine solche Steuerung oder Regelung wird im Allgemeinen für eine Permanentmagnet-Synchronmaschine benötigt und kann bei dem hierin vorgestellten Konzept platzsparend in dem ansonsten leer bleibenden zweiten Teilbereich der zentralen Durchgangsöffnung in dem ersten Lagerträger aufgenommen werden.

Gemäss einer Ausführungsform kann der Stator radial innerhalb des Rotors angeordnet sein.

Anders ausgedrückt kann die Permanentmagnet-Synchronmaschine als Aussenläufer-Maschine ausgebildet sein, bei der sich der Rotor radial ausserhalb um den Stator drehen kann. Für die hierin vorgestellte Permanentmagnet-Synchronmaschine kann sich hierdurch eine vorteilhafte Lastenverteilung ergeben.

Alternativ kann gemäss einer Ausführungsform der Stator radial ausserhalb des Rotors angeordnet sein.

Bei dieser als Innenläufer-Maschine ausgestalteten Form der Permanentmagnet-Synchronmaschine können sich vorteilhafte Eigenschaften wie beispielsweise ein geringeres Trägheitsmoment der zu rotierenden Anteile der Maschine ergeben.

Gemäss einer Ausführungsform kann die Permanentmagnet-Synchronmaschine ferner eine Bremsscheibe und eine Bremse aufweisen. Die Bremsscheibe kann hierbei drehfest an der Laufrolle angeordnet sein. Die Bremse kann an einem der Lagerträger fixiert sein.

Typischerweise muss bei einem Aufzug eine Verlagerung der Aufzugkabine gebremst werden können. Eine hierfür einzusetzende Bremsanlage kann direkt an der Antriebsmaschine des Aufzugs vorgesehen sein. Bei dem hierin vorgestellten Ansatz kann die Bremsanlage mitsamt ihrer Bremse und der von der Bremse zu bremsenden Bremsscheibe in die Permanentmagnet-Synchronmaschine integriert sein. Die Bremsscheibe kann dabei als passives Bauelement an der Laufrolle angeordnet sein und sich mit dieser mitdrehen. Hierbei kann die Bremsscheibe einstückig, d.h. integral, mit der Laufrolle ausgebildet sein oder als separates Bauelement an der Laufrolle drehfest befestigt sein. Die Bremse kann stationär fixiert oder zumindest drehfest an dem ersten oder den zweiten Lagerträger befestigt sein. Bei Bedarf kann die Bremse aktiviert werden, um beispielsweise mit Bremsklötzen gegen die relativ zu der Bremse rotierende Bremsscheibe zu pressen und diese somit aufgrund entstehender Reibung abzubremsen.

Die hierin vorgestellte mögliche Integrierung der Bremsanlage in die Permanentmagnet-Synchronmaschine ermöglicht dabei einerseits eine kompakte Bauform und andererseits eine Reduzierung einer Anzahl von Baukomponenten. Ausserdem können Kraftverläufe und/oder Kraftübertragungen innerhalb der Permanentmagnet-Synchronmaschine vorteilhaft ausgestaltet werden.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend wird eine Ausführungsform der Erfindung unter Bezugnahme auf die beigefügte Zeichnung beschrieben, wobei weder die Zeichnung noch die Beschreibung als die Erfindung einschränkend auszulegen sind.

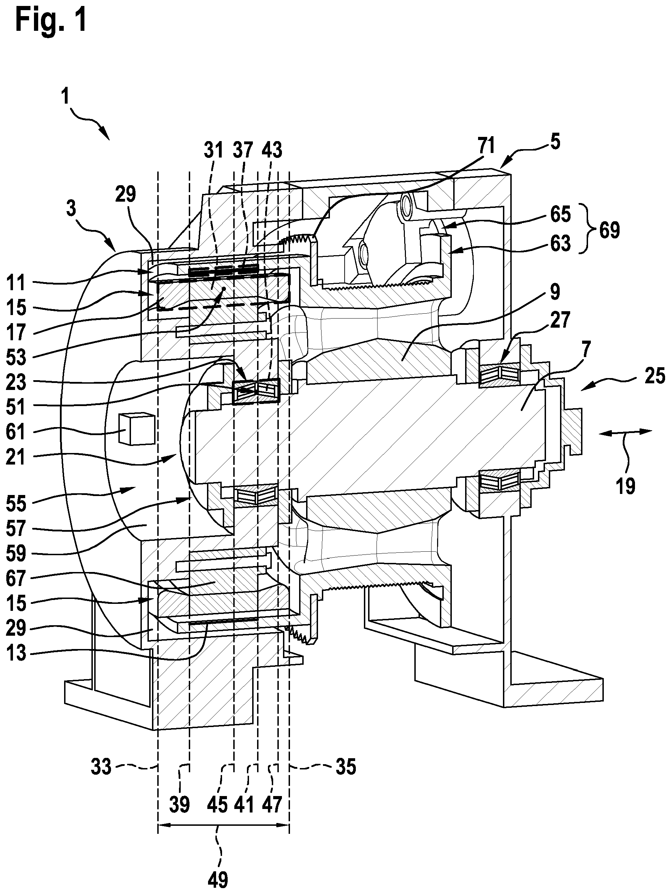

Fig. 1 zeigt eine perspektivische Längsschnittansicht durch eine Permanentmagnet-Synchronmaschine gemäss einer Ausführungsform der vorliegenden Erfindung.

Die Figur ist lediglich schematisch und nicht massstabsgetreu. Gleiche Bezugszeichen bezeichnen in der Figur gleiche oder gleichwirkende Merkmale.

Fig. 1 zeigt eine Permanentmagnet-Synchronmaschine 1 gemäss einer Ausführungsform der vorliegenden Erfindung. Die die Permanentmagnet-Synchronmaschine 1 ist für einen Einsatz in einem Aufzug konzipiert.

Die Permanentmagnet-Synchronmaschine 1 weist einen ersten Lagerträger 3, einen zweiten Lagerträger 5, einen Schaft 7, eine Laufrolle 9, einen Rotor 11 und einen Stator 15 auf. An dem Rotor 11 sind Rotormagnete 13 angeordnet. Der Stator 15 verfügt über Statorwicklungen 17.

Der Schaft 7 erstreckt sich in einer Axialrichtung 19 zwischen dem ersten Lager 3 und dem zweiten Lager 5. Dabei ist der Schaft 7 nahe einem ersten Ende 21 durch ein erstes Lager 23 und an einem zweiten Ende 25 durch ein zweites Lager 27 rotierfähig gelagert gehalten.

Die Laufrolle 9 ist drehfest mit dem Schaft 7 verbunden und in Axialrichtung 19 zentral an dem Schaft 7 angeordnet. Die Laufrolle 9 befindet sich somit zwischen dem ersten Lagerträger 3 und dem zweiten Lagerträger 5. Eine zylindrische Mantelfläche der Laufrolle 9 ist mit umfangsmässig verlaufenden Rillen ausgestattet, um darüber verlaufende Seil- oder Riemen-artige Tragmittel, an denen die Aufzugkabine des Aufzugs aufgehängt ist, zu führen und/oder eine Traktion mit diesen zu erhöhen.

Der Rotor 11 ist drehfest an der Laufrolle 9 angeordnet. In einer Trägerstruktur des Rotors 11 sind die Rotormagnete 13 aufgenommen und fixiert. Der Rotor 11 bzw. dessen Trägerstruktur ist im dargestellten Beispiel einstückig mit der Laufrolle 9 ausgebildet. Der Rotor 11 bzw. die Trägerstruktur ist dabei zylinderförmig und erstreckt sich ausgehend von der Laufrolle 9 in Axialrichtung hin zu dem ersten Lagerträger 3. In dem ersten Lagerträger 3 ist hierbei eine zylindrisch umlaufende Ausnehmung 29 ausgebildet. Die Ausnehmung 29 ist konzentrisch mit dem ersten Lager 23 ausgebildet und verläuft um dieses herum. Der Rotor 11 bzw. ein signifikanter Anteil des Rotors 11 erstreckt sich bis in diese umlaufende Ausnehmung 29 hinein und ist in dieser aufgenommen.

Der Stator 15 ist drehfest an dem ersten Lagerträger 3 angeordnet. Der Stator 15 ist dabei über eine Haltestruktur 67 in dem Lagerträger 3 verankert. Ebenso wie der Rotor 11 ist hierbei der Stator 15 vollständig oder zumindest grösstenteils in der zylindrisch um das erste Lager 23 umlaufenden Ausnehmung 29 aufgenommen.

Um die Positionen des Stators 15, des Rotors 11 und des ersten Lagers 23 bezüglich ihrer Position in Axialrichtung 19 definieren und vergleichen zu können, werden Volumina, in der eine der jeweiligen Komponenten aufgenommen ist, und deren Ränder in Axialrichtung 19 definiert.

Ein erstes Volumen 31 umgibt bzw. umhüllt die Statorwicklungen 17. Das erste Volumen 31 ist hierbei zylindrisch und umlaufend um das erste Lager 23 ausgebildet. Das erste Volumen 31 erstreckt sich dabei von einem axial vorderen ersten Rand 33 bis zu einem axial hinteren ersten Rand 35. Die Distanz in Axialrichtung 19 zwischen den vorderen ersten Rand 33 und dem hinteren ersten Rand 35 wird nachfolgend als axiale Längenbegrenzung 49 bezeichnet.

Ein zweites Volumen 37 umgibt bzw. umhüllt die Rotormagnete 13. Das zweite Volumen 37 ist ebenfalls zylindrisch und umlaufend um das erste Lager 23 ausgebildet und erstreckt sich von einem axial vorderen zweiten Rand 39 bis zu einem axial hinteren zweiten Rand 41.

Ein drittes Volumen 43 umgibt bzw. umhüllt das erste Lager 23. Dieses dritte Volumen 43 ist zylindrisch und um den Schaft 7 nahe dessen ersten Ende 21 umlaufend ausgebildet. Das dritte Volumen 43 erstreckt sich von einem axial vorderen dritten Rand 45 bis zu einem axial hinteren dritten Rand 47.

Die Rotormagnete 13 und das erste Lager 23 sind bei der hier vorgestellten Permanentmagnet-Synchronmaschine 1 derart angeordnet, dass der vordere zweite Rand 39, der hintere zweite Rand 41, der vordere dritte Rand 45 und der hintere dritte Rand 47 sich alle innerhalb der axialen Längenbegrenzung 49 befinden.

Die Rotormagnete 13 und das erste Lager 23 sind somit äusserst platzsparend innerhalb des von den Statorwicklungen 17 umschlossenen Zylindervolumens aufgenommen.

Ein Schwerpunkt 51 des ersten Lagers 23 befindet sich dabei in Axialrichtung 19 näher bei der Laufrolle 9 als ein Schwerpunkt 53 der Statorwicklungen 17.

Bei der vorgeschlagenen Permanentmagnet-Synchronmaschine 1 ist in dem ersten Lagerträger 3 und vorzugsweise auch in dem zweiten Lagerträger 5 in einem zentralen Bereich jeweils eine Durchgangsöffnung 55 vorgesehen. Sowohl das erste Lager 23 als auch ein an dem ersten Lager 23 gelagerter Teil des Schafts 7 erstrecken sich von einem Zentralbereich der Permanentmagnet-Synchronmaschine 1 kommend in Axialrichtung 19 lediglich entlang eines ersten Teilbereichs 57 der Durchgangsöffnung 55, wohingegen ein zweiter Teilbereich 59 der Durchgangsöffnung 55 nicht von dem Lager 23 und/oder dem Schaft 7 erreicht wird.

In diesen frei bleibenden zweiten Teilbereich 59 können dabei eine oder mehrere Zusatzkomponenten 61 der Permanentmagnet-Synchronmaschine 1 teilweise oder vollständig aufgenommen werden, ohne den für die gesamte Synchronmaschine 1 notwendigen Bauraum signifikant zu vergrössern. Die im dargestellten Beispiel lediglich sehr schematisch dargestellte Zusatzkomponente 61 kann beispielsweise eine Steuerung oder eine Regelung der Permanentmagnet-Synchronmaschine 1 sein.

Die Permanentmagnet-Synchronmaschine 1 verfügt ferner über eine Bremsanlage 69. Hierfür ist eine Bremsscheibe 63 an der Laufrolle 9 angeordnet bzw. vorzugsweise einstückig mit dieser ausgebildet. Eine zugehörige Bremse 65 ist an einem der Lagerträger 3, 5 befestigt. Im dargestellten Beispiel ist die Bremse 65 an dem zweiten Lagerträger 5 fixiert. Sie kann jedoch alternativ auch an dem ersten Lagerträger 3 angeordnet sein.

Die Permanentmagnet-Synchronmaschine 1 verfügt ferner über ein Zahnrad 71 zur Betätigung der Synchronmaschine 1 während einer manuellen Evakuierung des Aufzuges. Das Zahnrad 71 ist hierfür an der Laufrolle 9 angeordnet bzw. vorzugsweise einstückig mit dieser ausgebildet.

Die vorgestellte Permanentmagnet-Synchronmaschine 1 kann mit weniger Teilen auskommen als herkömmliche für Aufzüge eingesetzte Maschinen, insbesondere deswegen, weil ein Drehmoment der Bremse 65, des Motors und der Laufrolle 9 über ein und dasselbe Element übertragen werden können und nicht notwendigerweise ein Maschinenrahmen vorhanden ist. Es lässt sich somit eine kompaktere Bauweise erreichen. Insbesondere kann eine axiale Länge der Maschine im Vergleich zu herkömmlichen Maschinen kürzer sein, da sich das erste Lager 23 und die Rotormagnete 13 innerhalb der Tiefe der Statorwicklungen 17 befinden.

Abschliessend ist darauf hinzuweisen, dass Begriffe wie "aufweisend", "umfassend", etc. keine anderen Elemente oder Schritte ausschliessen und Begriffe wie "eine" oder "ein" keine Vielzahl ausschliessen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Getriebelose Permanentmagnet-Synchronmaschine (1) für einen Aufzug, aufweisend:
einen ersten und einen zweiten Lagerträger (3, 5);
einen Schaft (7);
eine Laufrolle (9);
einen Rotor (11) mit daran angeordneten Rotormagneten (13);
einen Stator (15) mit daran angeordneten Statorwicklungen (17);
wobei der Schaft (7) sich in Axialrichtung (19) zwischen dem ersten und dem zweiten Lagerträger (3, 5) erstreckt, nahe einem ersten Ende (21) durch ein erstes Lager (23) an dem ersten Lagerträger (3) rotierfähig gelagert gehalten ist und nahe einem zweiten Ende (25) durch ein zweites Lager (27) an dem zweiten Lagerträger (5) rotierfähig gelagert gehalten ist;
wobei die Laufrolle (9) drehfest an dem Schaft (7) angeordnet ist;
wobei der Rotor (11) drehfest an der Laufrolle (9) angeordnet ist und in einer zylindrisch um das erste Lager (23) umlaufenden Ausnehmung (29) in dem ersten Lagerträger (3) aufgenommen ist;
wobei der Stator (15) drehfest an dem ersten Lagerträger (3) angeordnet ist und in der zylindrisch um das erste Lager (23) umlaufenden Ausnehmung (29) aufgenommen ist;
wobei die Statorwicklungen (17) sich innerhalb eines zylindrischen, um das erste Lager (23) umlaufenden ersten Volumens (31), welches von einem axial vorderen ersten Rand (33) bis zu einem axial hinteren ersten Rand (35) reicht, erstrecken;
wobei die Rotormagnete (13) sich innerhalb eines zylindrischen, um das erste Lager (23) umlaufenden zweiten Volumens (37), welches von einem axial vorderen zweiten Rand (39) bis zu einem axial hinteren zweiten Rand (41) reicht, erstrecken;
wobei das erste Lager (23) sich innerhalb eines zylindrischen, um den Schaft (7) nahe seinem ersten Ende (21) umlaufenden dritten Volumens (43), welches von einem axial vorderen dritten Rand (45) bis zu einem axial hinteren dritten Rand (47) reicht, erstreckt;
wobei der vordere zweite Rand (39), der hintere zweite Rand (41), der vordere dritte Rand (45) und der hintere dritte Rand (47) innerhalb einer von dem vorderen ersten Rand (33) und dem hinteren ersten Rand (35) begrenzten axialen Längenbegrenzung (47) verlaufen.

2. Getriebelose Permanentmagnet-Synchronmaschine nach Anspruch 1, wobei ein Schwerpunkt (51) des ersten Lagers (23) sich in Axialrichtung (19) näher bei der Laufrolle (9) befindet als ein Schwerpunkt (53) der Statorwicklungen (17).

3. Getriebelose Permanentmagnet-Synchronmaschine nach einem der vorangehenden Ansprüche, wobei der erste Lagerträger (3) in einem radial zentralen Bereich eine Durchgangsöffnung (55) aufweist und wobei das erste Lager (23) und ein an dem ersten Lager (23) gelagerter Teil des Schafts (7) in Axialrichtung (19) sich lediglich durch einen ersten Teilbereich (57) der Durchgangsöffnung (55) erstrecken und nicht in einen zweiten Teilbereich (59) der Durchgangsöffnung (55) ragen.

4. Getriebelose Permanentmagnet-Synchronmaschine nach Anspruch 3, wobei die Permanentmagnet-Synchronmaschine (1) ferner wenigstens eine Zusatzkomponente (61) aufweist, wobei die Zusatzkomponente (61) zumindest teilweise in dem zweiten Teilbereich (59) aufgenommen ist.

5. Getriebelose Permanentmagnet-Synchronmaschine nach Anspruch 4, wobei die Zusatzkomponente (61) einen Betrieb der Permanentmagnet-Synchronmaschine (1) steuert oder regelt.

6. Getriebelose Permanentmagnet-Synchronmaschine nach einem der vorangehenden Ansprüche, wobei der Stator (15) radial innerhalb des Rotors (11) angeordnet ist.

7. Getriebelose Permanentmagnet-Synchronmaschine nach einem der Ansprüche 1 bis 5, wobei der Stator (15) radial ausserhalb des Rotors (11) angeordnet ist.

8. Getriebelose Permanentmagnet-Synchronmaschine nach einem der vorangehenden Ansprüche, ferner aufweisend eine Bremsscheibe (63) und eine Bremse (65), wobei die Bremsscheibe (63) drehfest an der Laufrolle (9) angeordnet ist und wobei die Bremse (65) an einem der Lagerträger (3, 5) fixiert ist.
